# EUROPEAN PATENT APPLICATION

(11) **EP 3 823 136 A1**
(43) Date of publication of application: **19.05.2021**
(21) Application number: 19209788.9
(22) Date of filing: 18.11.2019
(51) Int. Cl.: H02K 1/24, H02K 29/03

(54) **ROTOR FOR A SYNCHRONOUS MACHINE**

(71) Applicant: Xylem Europe GmbH, 8200 Schaffhausen (CH)
(72) Inventor: REFFO, Fabio, 36077 Altavilla Vic.na (IT); BICEGO, Riccardo, 36070 Castelgomberto (IT)
(74) Representative: Modiano, Gabriella Diana

(57) **Abstract**

A rotor for a synchronous machine is described. The rotor comprising a central axis; a bore being centrally positioned and extending axially relative to the central axis. A plurality of poles arranged around the bore. The poles extend axially in a direction parallel to the central axis. An air gap surface configured to face an air gap and a plurality of slots mutually angularly spaced relative to the central axis wherein each slot extends axially in a direction parallel to the central axis and wherein each slot is adjacent the air gap surface.

## Description

### Technical Field

This disclosure relates to the field of synchronous machines, in particular to the field of cogging torque reduction in synchronous machines, and more in particular to the field of cogging torque reduction in synchronous reluctance machines.

### Background

Synchronous machines are generally known. In a synchronous reluctance machine, generally, there is a stator with multiphase windings forming a plurality of poles which are similar to those of induction motors. The synchronous reluctance machine also includes a rotor that does not use windings but does have the same number of poles as the stator. By providing a rotating field in the stator windings, a magnetomotive force acts upon the rotor resulting in the rotor being driven at a synchronous speed proportional to the rotating field in the stator. In an IPM synchronous machine, typically, there is a stator with multiphase windings and a rotor that has interior permanent magnets mounted thereon.

In a conventional synchronous machine the rotor is intended to rotate within an embracing stator. The rotor poles extend radially outwardly and the stator poles radially inwardly. It is also known to arrange the machine such that an outer rotor has radially inwardly extending poles and the inner stator has radially outwardly extending poles.

The rotor may be transversely laminated and comprises a stack of laminations of a suitable ferromagnetic material. The laminations, each, define the profile of the rotor bore and a series of angularly arranged rotor poles. The axial bore receives a shaft for rotational motion. The laminations in this form of reluctance machine lie in planes which are perpendicular to the axis of rotation of the rotor.

Independent of the machine type, a cogging torque may be generated by the discontinuity of the stator lamination at the airgap. The discontinuity is caused by the teeth of the stator. During operation, cogging torque may reduce the efficiency of the motor and cause vibrations that can adversely affect both the motor and driven loads. Cogging torque also can degrade the quality of the product associated with the driven load. Lower cogging torque leads to decrease in transient losses in the reluctance machines as well as smoother reaction to electrical torque inputs.

There are a number of approaches to reduce or avoid cogging torque. Such approaches include rotor skewing which sectioning the core and introducing a relative angular rotation to each section. Another approach involves varying the shape of the magnets or the magnetization paths.

While various approaches have been taken to reduce or avoid such cogging, the aforementioned approaches have not provided a suitable solution. Accordingly, there is a need for a new approach to the problem of attenuating cogging torque.

The present disclosure is directed, at least in part, to improving or overcoming one or more aspects of the prior art system.

### Brief Summary of the Invention

The present disclosure describes a rotor for a synchronous machine, the rotor comprising a central axis; a bore being centrally positioned and extending axially relative to the central axis; a plurality of poles arranged around the bore, the poles extend axially in a direction parallel to the central axis; an air gap surface configured to face an air gap; and a plurality of slots mutually angularly spaced relative to the central axis wherein each slot extends axially in a direction parallel to the central axis and wherein each slot is adjacent the air gap surface.

### Brief Description of the Drawings

The foregoing and other features and advantages of the present disclosure will be more fully understood from the following description of various embodiments, when read together with the accompanying drawings, in which:
Fig. 1 is an isometric view of a rotor in the first embodiment, according to the present disclosure;
Fig. 2 is an isometric view of a rotor in the second embodiment, according to the present disclosure;
Fig. 3 is a cross-sectional view of a rotor in the first embodiment, according to the present disclosure;
Fig. 4 is a cross-sectional view of a rotor in the second embodiment, according to the present disclosure;
Fig. 5 is a cross-sectional view of a rotor, in the first embodiment, having slots in a triangular shape;
Fig. 6 is a cross-sectional view of a rotor, in the first embodiment, having slots in a disco-rectangular shape;
Fig. 7 is a cross-sectional view of a rotor, in the first embodiment, having slots in a shape of slits;
Fig. 8 is a cross-sectional view of an internally mounted permanent magnet type rotor in the first embodiment, according to the present disclosure;
Fig. 9 is a cross-sectional view of a permanent magnet assisted type rotor in the first embodiment, according to the present disclosure;
Fig. 10 is a variation of a cross-sectional view of a permanent magnet assisted type rotor in the first embodiment, according to the present disclosure;
Fig. 11 is a schematic drawing of a synchronous machine with an internally positioned rotor; and
Fig, 12 is a schematic drawing of a synchronous machine with an externally positioned rotor.

### Detailed Description

This disclosure generally relates to a rotor for a synchronous machine having a low torque ripple effect.

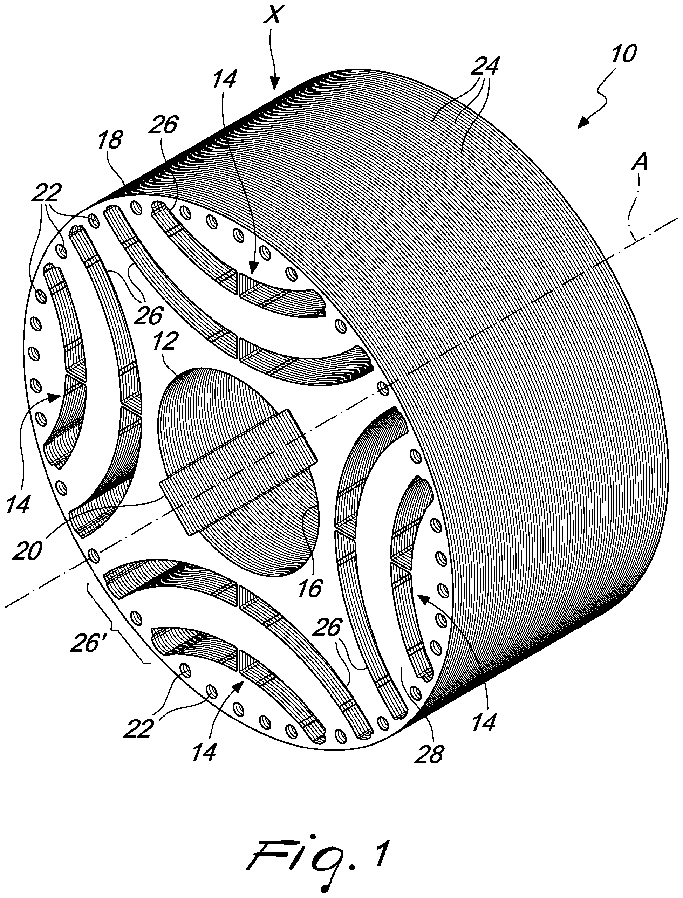

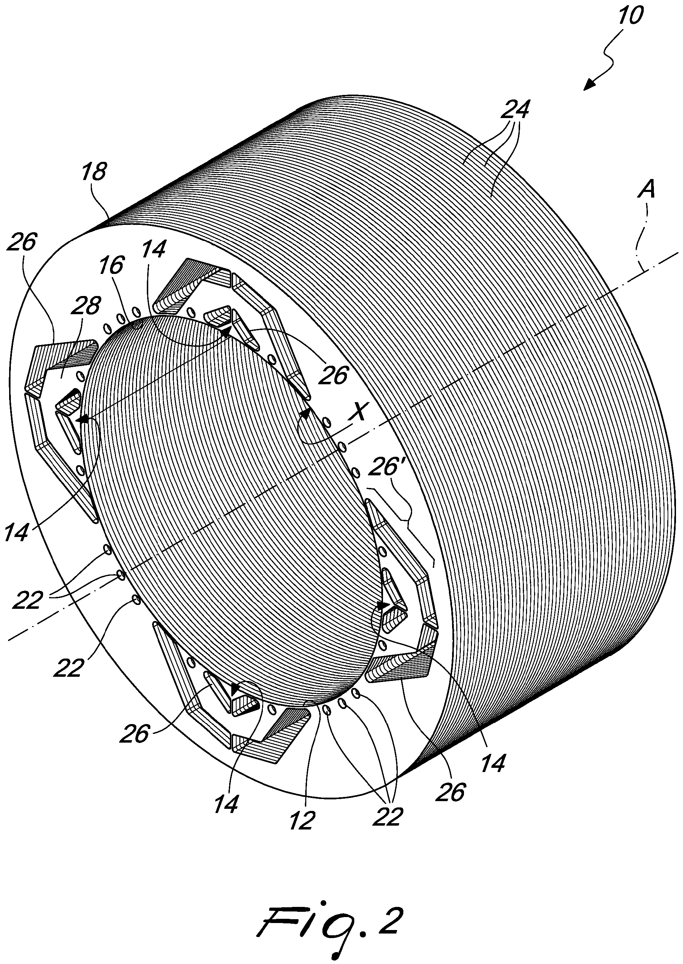

Figs. 1 and 2 illustrate first and second embodiments of a rotor **10** for a synchronous machine (not shown). Each rotor **10** has a central axis **A.** The rotor **10** is configured to rotate about the central axis **A.** The rotor **10** has a bore **12.** The bore **12** is centrally positioned in the rotor **10.** The bore **12** extends axially relative to the central axis **12.** A plurality of poles **14** are arranged around the bore **12.** The poles **14** extend axially in a direction parallel to the central axis **A.** The rotors **10** in Figs. 1 and 2 are shown with four poles **14.** Other number of poles **14** may be provided as required. The rotor **10** has an internal surface **16** and an external surface **18.** The internal surface **16** defines the bore **12.**

The rotor **10** has an air gap surface **X.** The air gap surface **X** is the portion of the rotor **10** that borders an air gap in a synchronous machine. The air gap surface **X** faces onto the air gap. The air gap surface **X** is configured to face the air gap in a synchronous machine. The air gap surface **X** may be the internal surface **16** or the external surface **18** of the rotor **10.** With reference to Fig.1, in a rotor **10** that is configured as an inner rotor, the air gap surface **X** is the external surface **18.** With reference to Fig. 2, in a rotor that is configured as an outer rotor, the air gap surface **X** is the internal surface **16.**

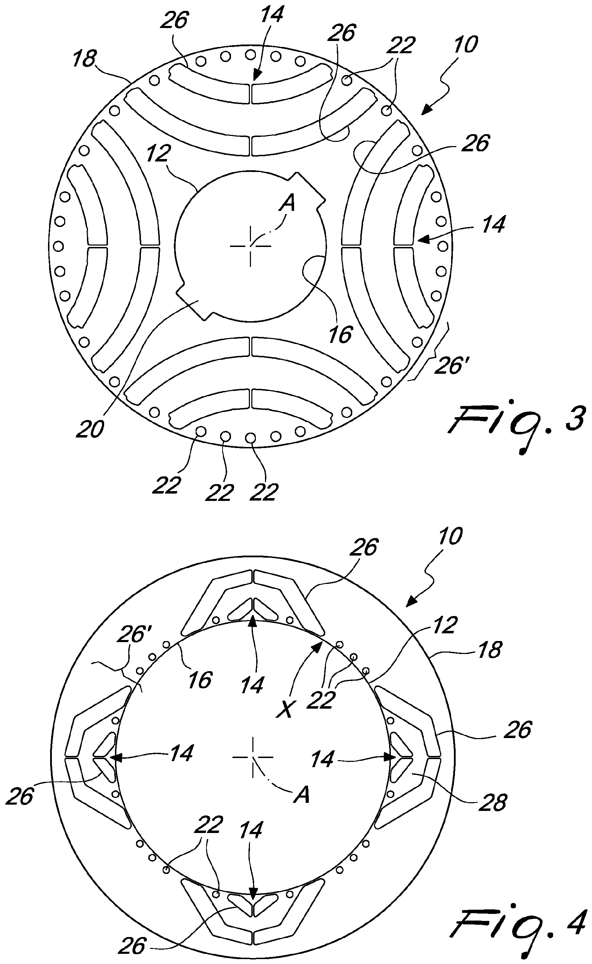

With respect to Figs. 1 and 3, in the first embodiment, the bore **12** is configured to receive a transmission shaft (not shown). The bore **12** is configured in use for the connection of the rotor **10** with the shaft, to be actuated in a rotational motion. In this embodiment, notches **20** for abutment are provided for coupling to the transmission shaft. The notches **20** couple with keys or similar locking elements arranged on the transmission shaft. With respect to Figs. 2 and 4, in the second embodiment, the bore **12** is configured to accommodate a stator (not shown). The bore **12** is configured to be actuated in a rotational motion around the stator. The bore **12** is sized to accommodate the stator.

With reference to Figs. 2 to 4, the rotor **10** comprises a plurality of slots **22.** The slots **22** function as a series of discrete magnetic field barriers. The plurality of slots **22** are mutually angularly spaced relative to the central axis **A.** The plurality of slots **22** are mutually spaced about the central axis **A.** The slots **22** are circumferentially positioned about the central axis **A.** In a cross section through the rotor **10**, the slots **22** are separated and spaced apart along a circumferential direction. In an embodiment, the plurality of slots **22** are uniformly mutually spaced about the central axis **A.**

Each slot **22** extends axially in a direction parallel to the central axis **A.** The slots **22** are configured as through passages. Each slot **22** is positioned adjacent the air gap surface **X.** The plurality of slots **22** is circumferentially adjacent to the air gap surface **X.** The plurality of slots **22** border on the air gap surface **X.** The slots **22** are positioned along the periphery of the rotor **12.** Slots **22** are not contiguous with the air gap surface. The plurality of slots **22** is arranged so as to be concentrically aligned relative to the air gap surface **X.**

Generally, the number of slots **22** (including the flux barriers) may be selected using the following relationship: (1.25÷1.35)*Q, where Q is the stator slot number.

The slots **22** encircle the plurality of poles **14.** The plurality of slots **22** form a discontinuous magnetic field barrier around the plurality of poles **22.** In an embodiment, the slots **22** are positioned between the air gap surface **X** and the plurality of poles **14.**

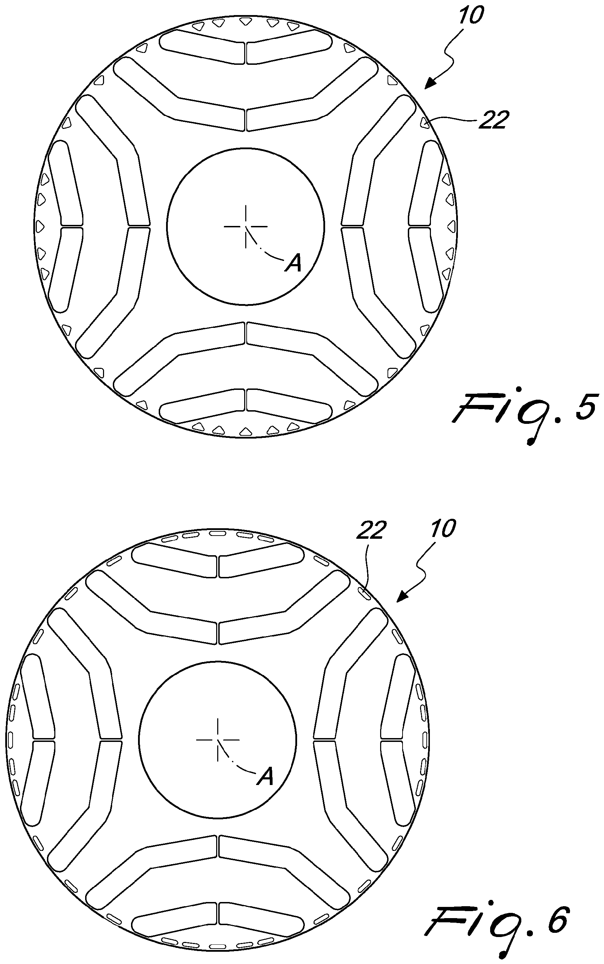

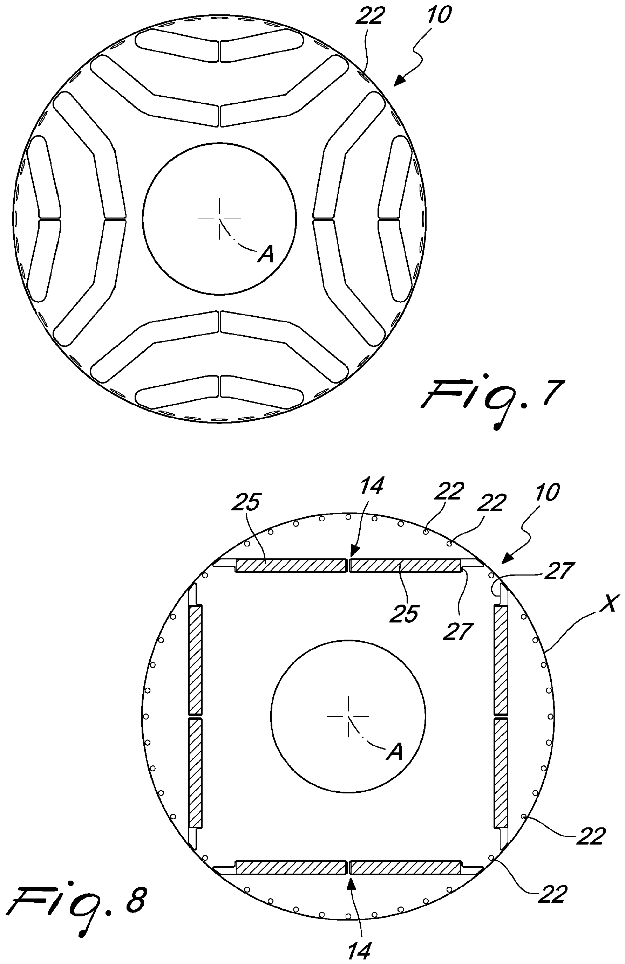

The slots **22** are calibrated in shape and size according to the size of the synchronous machine, stator slot number and rotor geometry. The shape of the slots **22** is selected from the group consisting of: circular, elliptical, disco-rectangular and triangular. Figs. 3 and 4 illustrate the slots **22** with a circular shape. Fig. 5 illustrates the slots **22** with a triangular shape. In an embodiment, the apex of each triangle is orientated towards the central axis **A.** The orientation of the triangle may be varied as required. Fig. 6 illustrate the slots **22** with a disco-rectangular shape. Fig. 7 illustrate the slots **22** with an elliptical shape. In particular, elliptical slits.

With respect to Fig. 1, in the first embodiment, the rotor **10** is configured as an inner rotor. In this rotor **10**, each slot **22** is radially spaced from the internal surface **16** and radially adjacent to the external surface **18.** The plurality of slots **22** is circumferentially adjacent to the external surface **18.** The plurality of slots **22** border on the external surface **18.** The slots **22** are not contiguous with the external surface **18.** The plurality of slots **22** is arranged so as to be concentrically aligned relative to the external surface **18.**

The slots **22** encircle the plurality of the radially outwardly extending poles **14.** The plurality of slots **22** form a discontinuous magnetic field barrier around the plurality of the radially outwardly extending poles **14.** In an embodiment, the slots **22** are positioned between the external surface **18** and the plurality of the radially outwardly extending poles **14.**

With respect to Fig. 2, in the second embodiment, the rotor **10** is configured as an outer rotor. In this rotor **10**, each slot **22** is radially spaced from the external surface **18** and radially adjacent to the internal surface **16.** The plurality of slots **22** is circumferentially adjacent to the internal surface **16.** The plurality of slots **22** border on the internal surface **16.** The slots **22** are not contiguous with the internal surface **16.** The plurality of slots **22** is arranged so as to be concentrically aligned relative to the internal surface **16.**

The slots **22** encircle the plurality of the radially inwardly extending poles **14.** The plurality of slots **22** form a discontinuous magnetic field barrier around the plurality of the radially inwardly extending poles **14.** In an embodiment, the slots are positioned between the internal surface **16** and the plurality of the radially inwardly extending poles **14.**

In an embodiment, the rotor **10** is transversely laminated. The rotor **10** comprises a plurality of transverse laminates **24** stacked along an axial direction of the rotor **10.** The rotor **10** is formed through the aligned stacking in succession of a plurality of the transverse laminates **24.** The transverse laminates **24** are shaped like discs and are constrained to one another to constitute a cylindrical structure that constitutes the rotor **10.**

Each laminate **24** is made of ferromagnetic material. Each laminate **24** comprises flux barriers **26.** The flux barriers **26** are formed as voids in the rotor **10.** The flux barriers **26** may be curvilinear, linear or chevron shaped. The flux barriers **26** are arranged in groups **26'** where each group constitutes a pole **14.** In the illustrated embodiment, in each group **26'** a plurality of flux barriers **26** are formed in each quarter circumferential angular region in the rotor **10.** The flux barriers **26** is a plurality of voids.

Flux guides **28** are positioned adjacent the flux barriers **26.** Flux guides **28** are interposed between the flux barriers **26.** Flux guides **28** are positioned between flux barriers **26** in each group **26'.**

The flux barriers **26** are arranged to define the poles **14.** The poles **14** are mutually angularly spaced about the central axis **A.** The groups of flux barriers **26'** are arranged equidistant from one another in the angular direction along the rotor **10.** The plurality of slots **22** are positioned around the plurality of poles **14.** The plurality of slots **22** are positioned around the groups of flux barriers **26'.** The slots **22** are positioned around the flux barriers **26** and the flux guides **28** that define the plurality of poles **14.**

The groups flux barriers **26'** are positioned adjacent the air gap surface **X** with the plurality of slots **22** positioned between the groups flux barriers **26'** and the air gap surface **X.** The plurality of slots **22** are positioned between the flux barriers **26'** and the air gap surface **X.** The plurality of slots **22** are positioned between the air gap surface **X** and the flux barriers **26** and the flux guides **28.**

The dimension slots **22** may be varied in respect to the type and the dimension of the synchronous machine. In an embodiment, the dimension of the slot **22** may be approximately one half of the flux barrier height **26.** In a rotor **10** with a plurality of flux barriers **26**, the flux barrier **26** closer to the air gap surface **X** is used reference.

If the slot **22** is circular the dimension is the diameter slot **22.** If the slot **22** is not circular, the dimension is the width of the slot **22** that is approximately equal to the height of the flux barrier **26.** In a rotor **10** with a plurality of flux barriers **26**, the flux barrier **26** closer to the air gap surface **X** is used reference. In any case the minimum height or width cannot be smaller than the thickness of each laminate **24.**

In an embodiment, the rotor **10** may of the internally mounted permanent magnet type where torque is produced by the presence of the magnets. The magnets further provide rotor magnetization. In an internally mounted permanent magnet type rotor **10** the flux barriers **26** may be the magnetic pockets where the permanent magnets are inserted.

Fig. 8 illustrates an internally mounted permanent magnet type rotor **10** configured as an inner rotor. The rotor **10** of the internally mounted permanent magnet type may configured as an outer rotor in accordance with the present disclosure. The rotor **10** comprises a plurality of magnet pockets **27.** A plurality of magnets **25** are inserted in the respective magnetic pockets **27.** The arrangement of the magnet pockets **27** may be configured as required.

A single magnet **25** may define a pole **14.** In an embodiment, a plurality of magnets **25** are grouped to define respective plurality of poles **14.**

The positioning of the magnetic pockets **27** demarks the arrangement of the magnets **25.** The slots **22** are positioned around the plurality of magnetic pockets **27.** The plurality of magnetic pockets **27** are positioned adjacent the air gap surface **X** with the plurality of slots **22** positioned between the magnetic pockets **27** and the air gap surface **X.** The slots **22** are positioned around the plurality of magnets **25.** The plurality of magnets **25** are positioned adjacent the air gap surface **X** with the plurality of slots **22** positioned between the magnets **25** and the air gap surface **X.**

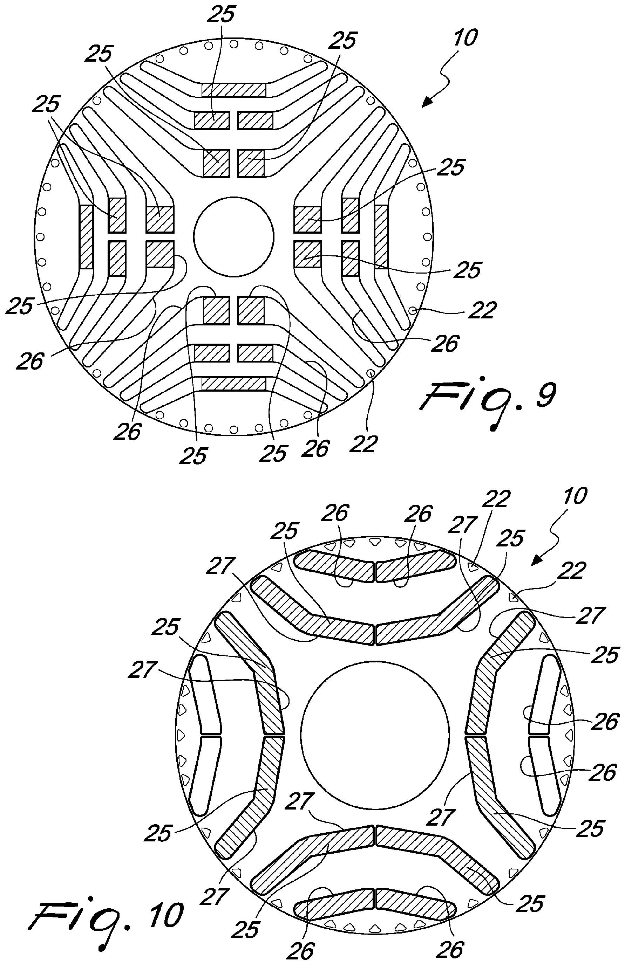

In an embodiment, the rotor **10** may be of the permanent magnet assisted type. Fig. 9 illustrates a permanent magnet assisted type rotor **10** configured as an inner rotor. The rotor **10** of the permanent magnet assisted type may configured as an outer rotor in accordance with the present disclosure. A plurality of magnets **25** are inserted in the respective flux barriers **26.** In an embodiment, each flux barrier **26** is provided with a magnet **25.** In an alternative embodiment, magnets **25** are inserted into a portion of the flux barriers **26** such that the remaining portion of the flux barriers **26** are not provided with magnets **25.** The number and distribution of magnets **25** in each pole **14** is the same.

In an alternative embodiment, with reference to Fig. 10, the rotor **10** further comprises a plurality of magnet pockets **27** positioned with the flux barriers **26.** The arrangement of the magnet pockets **27** may be configured as required. A plurality of magnets **25** are inserted in the magnetic pockets **27.** The slots **22** are positioned around the flux barriers **26** and the magnetic pockets **27.** The number and distribution of magnets **25** and magnetic pockets **27** in each pole **14** are the same.

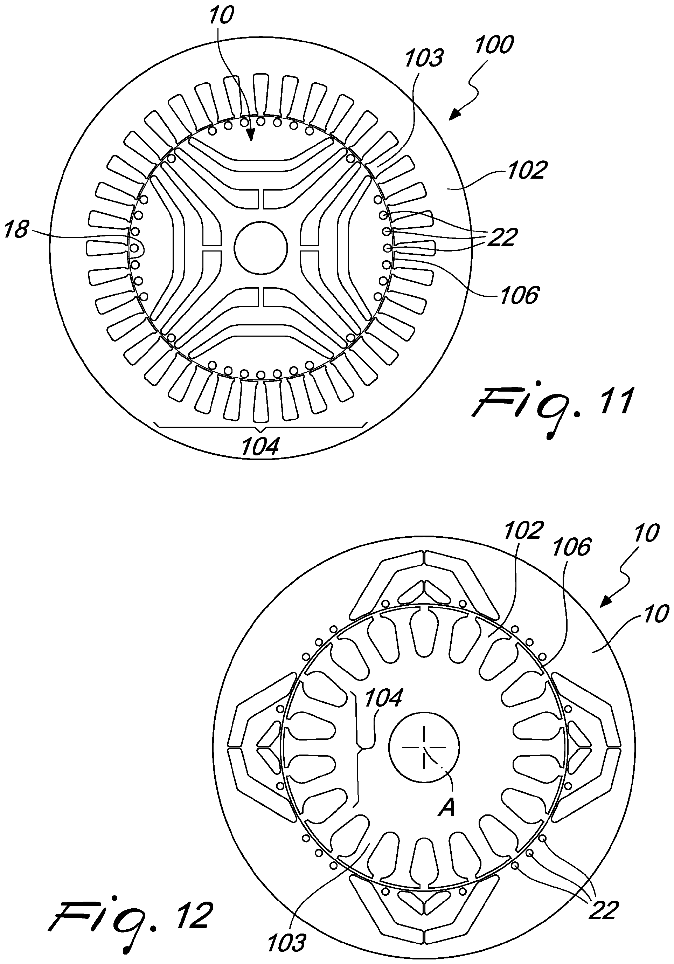

Figs. 11 and 12 schematically illustrate first and second embodiments of a synchronous machine **100.** Each of the synchronous machines **100** comprises a stator **102** for generating a rotating magnetic flux. Stator **102** comprises stator teeth **103.** The stator teeth **103** are arranged in groups as stator poles **104.** The synchronous machines **100** comprise a rotor **10** as herein described. The rotor **10** is spaced from the stator **102** by an air gap **106.** The rotor **10** is configured for rotating about the central axis **A** relative to the stator **102** in synchronization with the rotating magnetic flux. Each slot **22** is positioned adjacent to the air gap **106.** The air gap surface **X** faces the air gap **106** and the plurality of slots **22** are located adjacent to the air gap **106.** In an embodiment, the synchronous machine **100** is a reluctance machine.

With reference to Fig. 11, the synchronous machine **100** has an inner rotor **10** and an outer stator **102.** The external surface **18**, of the rotor **10**, faces the air gap **106.** The air gap **106** encircles the plurality of slots **22.** The plurality of slots **22** are positioned close to the air gap **106.** The stator **102**, at the inner peripheral portion that faces the rotor **10**, has a plurality of stator windings. In use, the stator windings are fed in a controlled manner in order to generate a magnetic field that is variable in intensity and direction to determine the rotation of the rotor **10** about the central axis A.

With reference to Fig. 12, the synchronous machine **100** has an outer rotor **10** and an inner stator **102.** The internal surface **16**, of the rotor **10**, faces the air gap **106.** The plurality of slots **22** encircles the air gap **106.** The plurality of slots **22** are positioned close to the air gap **106.** The stator **102**, at the outer peripheral portion that faces the rotor **10**, has a plurality of stator windings. In use, the stator windings are fed in a controlled manner in order to generate a magnetic field that is variable in intensity and direction to determine the rotation of the rotor **10** about the central axis A.

The synchronous machine may be configured as permanent magnet assisted reluctance machine (not shown) comprising a permanent magnet assisted type rotor **10.** The synchronous machine may be configured as an internally mounted permanent magnet machine (not shown) comprising an internally mounted permanent magnet type rotor **10.**

The skilled person would appreciate that foregoing embodiments may be modified or combined to obtain the rotor **10** of the present disclosure.

### Industrial Applicability

This disclosure describes a rotor **10** for a reluctance machine. The rotor **10** is provided with a plurality of slots that enable the reduction or balancing of the magnetic flux fluctuation during rotation so as to reduce the cogging torque. The presence of the slots negates the alignment effect (reluctance effect) of the stator teeth and the rotor lamination. The slots are obtained directly on the rotor during lamination punching and stacking process.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A rotor (10) for a synchronous machine (100), the rotor (10) comprising:
a central axis (A);
a bore (12) being centrally positioned and extending axially relative to the central axis (A);
a plurality of poles (14) arranged around the bore (12), the poles (14) extend axially in a direction parallel to the central axis (A);
an air gap surface (X) configured to face an air gap; and
a plurality of slots (22) mutually angularly spaced relative to the central axis wherein each slot (22) extends axially in a direction parallel to the central axis (A) and wherein each slot (22) is adjacent the air gap surface (X).

2. The rotor (10) of claim 1 further comprising an internal surface (16) and an external surface (18), the internal surface (16) defining the bore (12) wherein the bore (12) is configured to receive a transmission shaft wherein the air gap surface (X) is the external surface (18) and wherein each slot (22) is radially spaced from the internal surface (16) and radially adjacent to the external surface (18).

3. The rotor of claim 2 wherein the slots (22) are arranged so as to be concentrically aligned relative to the external surface (18).

4. The rotor of claim 1 further comprising an internal surface (16) and an external surface (18), the internal surface (16) defining the bore (12) wherein the bore (12) is configured to accommodate a stator, wherein the air gap surface (X) is the internal surface (16) and wherein the each slot (22) is radially spaced from the external surface (18) and radially adjacent to the internal surface (16).

5. The rotor of claim 4 wherein the slots (22) are arranged so as to be concentrically aligned relative to the internal surface (16).

6. The rotor of claims 1, 2, 3, 4 or 5 comprising a plurality of transverse laminates (24) stacked along an axial direction of the rotor (10).

7. The rotor of claim 6 further comprising a plurality of magnet pockets (27) wherein a plurality of magnets (25) are inserted in the magnetic pockets (27) wherein the slots (22) are positioned around the plurality of magnetic pockets (27).

8. The rotor of claim 6 wherein each laminate (24) comprises flux barriers (26), the flux barriers (26) being arranged to define the poles (14) wherein the poles (14) are mutually angularly spaced about the rotational axis (A) and wherein the slots (22) are positioned around the plurality of poles (14).

9. The rotor of claim 8 further comprising a plurality of magnets (25) wherein the plurality of magnets (25) are inserted in the flux barriers (26).

10. The rotor of claim 7 wherein the plurality of magnet pockets (27) are positioned with the flux barriers (26) and wherein a plurality of magnets (25) are inserted in the magnetic pockets (27).

11. The rotor (10) of any one of preceding claims wherein the shape of the slots (22) is selected from the group consisting of circular, elliptical, disco-rectangular and triangular.

12. A synchronous machine (100) comprising:
a stator (102) for generating a rotating magnetic flux, wherein the stator (102) comprises stator poles (104); and
a rotor (10) according to any one of the preceding claims wherein the rotor (10) is spaced from the stator (102) by an air gap (106), wherein the rotor (10) is configured for rotating about the central axis (A) relative to the stator (102) in synchronization with the rotating magnetic flux and wherein the air gap surface (X) faces the air gap (106) and the plurality of slots (22) located adjacent to the air gap (106).

13. The synchronous machine (100) of claim 12 wherein the synchronous machine is a reluctance machine.

14. The synchronous machine (100) of claim 12 wherein the synchronous machine is a permanent magnet assisted reluctance machine.

15. The synchronous machine (100) of claim 12 wherein the synchronous machine is a internally mounted permanent magnet machine.
